(19) Europäisches Patentamt / European Patent Office / Office européen des brevets

(11) **EP 2 230 711 B1**

(12) **EUROPEAN PATENT SPECIFICATION**

(45) Date of publication and mention of the grant of the patent:
**26.12.2012 Bulletin 2012/52**

(51) Int Cl.:
*H01M 10/052* (2010.01)   *H01M 10/0567* (2010.01)
*H01M 10/0568* (2010.01)   *H01M 10/42* (2006.01)
*H01G 9/038* (2006.01)

(21) Application number: **08859150.8**

(22) Date of filing: **20.11.2008**

(86) International application number:
**PCT/JP2008/071091**

(87) International publication number:
**WO 2009/075174 (18.06.2009 Gazette 2009/25)**

(54) **NON-AQUEOUS ELECTROLYTE SOLUTION AND NON-AQUEOUS ELECTROLYTE SECONDARY POWER SUPPLY COMPRISING THE SAME**

NICHTWÄSSRIGE ELEKTROLYTLÖSUNG UND ZWEITSTROMVERSORGUNG DIESELBE ENTHALTEND

SOLUTION D'ÉLECTROLYTE NON-AQUEUX ET ALIMENTATION ÉLECTRIQUE SECONDAIRE LA COMPRENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.12.2007 JP 2007322046**

(43) Date of publication of application:
**22.09.2010 Bulletin 2010/38**

(73) Proprietor: **Bridgestone Corporation**
**Tokyo 104-8340 (JP)**

(72) Inventor: **HORIKAWA, Yasuo**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
| | |
|---|---|
| **EP-A1- 1 329 974** | **EP-A1- 1 347 530** |
| **EP-A1- 1 748 511** | **WO-A1-2005/036690** |
| **JP-A- 2001 052 736** | **JP-A- 2002 075 444** |
| **JP-A- 2003 077 532** | **JP-A- 2005 116 306** |
| **JP-A- 2005 116 424** | **JP-A- 2006 024 380** |
| **JP-A- 2006 059 681** | **JP-A- 2006 286 571** |

**Description**

TECHNICAL FIELD

This invention relates to a non-aqueous electrolyte and a non-aqueous electrolyte secondary power source comprising the same, and more particularly to a non-aqueous electrolyte having non-combustibility as well as a non-aqueous electrolyte secondary power source having stable power source characteristics under high load conditions and exhibiting stable power source characteristics over a wide temperature range.

BACKGROUND ART

The non-aqueous electrolyte is used as an electrolyte for a lithium battery, a lithium ion secondary battery, an electric double layer capacitor or the like. These devices have a high voltage and a high energy density, so that they are widely used as a driving power source for personal computers, mobile phones and the like. As the non-aqueous electrolyte are generally used ones obtained by dissolving a support salt such as $LiPF_6$ or the like in an aprotic organic solvent such as a carbonate compound, an ether compound or the like. However, since the aprotic organic solvent is combustible, if it leaks from the device, there is a possibility of firing-burning and also there is a problem in view of the safety.

As to this problem is examined a method for rendering the non-aqueous electrolyte into a flame retardance. For example, there are proposed a method wherein a phosphate such as trimethyl phosphate or the like is used in the non-aqueous electrolyte, and a method wherein the phosphate is added to the aprotic organic solvent (see JP-A-H04-184870, JP-A-H08-22839 and JP-A-2000-182669). However, these phosphates are gradually reduction-decomposed on a negative electrode by repetition of discharge and recharge, so that there is a problem that battery performances such as discharge-recharge efficiency, cyclability and the like are largely deteriorated.

As to the latter problem, there are attempted a method wherein a compound for suppressing the decomposition of the phosphate is further added to the non-aqueous electrolyte, a method wherein the molecular structure of the phosphate itself is devised, and so on (see JP-A-H11-67267, JP-A-H10-189040 and JP-A-2003-109659). Even in these methods, however, there is a limit in the addition amount and also the flame retardance of the phosphate itself is deteriorated and the like, so that the electrolyte gets only into the self-extinguishing property and the safety of the electrolyte cannot be sufficiently ensured.

Also, JP-A-H06-13108 discloses a method wherein a phosphazene compound is added to the non-aqueous electrolyte for giving the flame retardance to the non-aqueous electrolyte. Some of the phosphazene compounds exhibit a high non-combustibility and have a tendency to improve the flame retardance of the non-aqueous electrolyte as the amount added to the non-aqueous electrolyte is increased. However, since the phosphazene compound exhibiting the high non-combustibility is generally low in the solubility of a support salt and the dielectric constant, as the addition amount is increased, the precipitation of the support salt and the lowering of electric conductivity are caused, and hence the discharge capacity of the battery may be lowered or the discharge-recharge performance may be deteriorated. Therefore, when the phosphazene compound exhibiting the high non-combustibility is added, there is a problem that the addition amount is limited.

Non-aqueous electrolyte solutions comprising a lithium salt, a non-aqueous solvent and a phosphazene compound are also described in the following documents, whereby the described solutions are used in secondary batteries or electric double layer capacitors : EP 1 748 511 A1, JP 2006 024380 A, EP 1 347 530 A1, EP 1 329 974 A1, JP 2001 052736 A, JP 2006 286751 A, JP 2006 059681 A, JP 2002 075444 A, JP 2003 077532 A, JP 2005 116306 A, JP 2005 116424 A and WO 2005/036690 A1.

Recently, secondary power sources such as the lithium ion secondary battery and the like are also actively developed as a power source in vehicles including HEV. For such an application, it is required that the safety is high even if the capacity is large, the output power is high, and stable performances can be exhibited within a wide temperature range, but the conventional techniques cannot be said to have a satisfactory level in these points.

DISCLOSURE OF THE INVENTION

It is, therefore, an object of the invention to solve the above-mentioned problems of the conventional techniques and to provide a non-aqueous electrolyte having high non-combustibility and a non-aqueous electrolyte secondary power source comprising such a non-aqueous electrolyte, having high safety and exhibiting stable performance even under high load conditions or low-temperature conditions.

The inventor has made various studies in order to achieve the above objects and discovered that non-combustibility can be given to a non-aqueous electrolyte by constructing the electrolyte by combining a specified cyclic phosphazene compound with a specified lithium compound, and further a non-aqueous electrolyte secondary power source using such an electrolyte exhibits excellent discharge performances even under high load conditions or low-temperature conditions, and as a result the invention has been accomplished.

That is, the non-aqueous electrolyte according to the invention is characterized by comprising:

a cyclic phosphazene compound represented by the following general formula (I):

$$(NPR_2)_n \qquad (I)$$

wherein Rs are independently fluorine, an alkoxy group or an aryloxy group and n is 3-4;
· a non-aqueous solvent;
LiPF$_6$; and
· at least one lithium amide selected from the group consisting of Li(FSO$_2$)$_2$N, Li(CF$_3$SO$_2$)$_2$N and Li(C$_2$F$_5$SO$_2$)$_2$N.

In the non-aqueous electrolyte according to the invention, as the cyclic phosphazene compound is preferable a compound of the general formula (I) wherein at least four of the Rs are fluorine.

In a preferable embodiment of the non-aqueous electrolyte according to the invention, a content of the cyclic phosphazene compound represented by the general formula (I) is 10-50% by volume based on the whole of the non-aqueous electrolyte.

In another preferable embodiment of the non-aqueous electrolyte according to the invention, a molar ratio of the LiPF$_6$ to the lithium amide (LiPF$_6$/lithium amide) is within a range of 1/4-4/1.

In another preferable embodiment of the non-aqueous electrolyte according to the invention, the non-aqueous solvent is an aprotic organic solvent.

Also, the non-aqueous electrolyte secondary power source according to the invention is characterized by comprising the above-described non-aqueous electrolyte, a positive electrode and a negative electrode.

According to the invention, there can be provided a non-aqueous electrolyte having non-combustibility due to the use of the non-aqueous solvent containing the specified cyclic phosphazene compound, and further capable of maintaining sufficient discharge performances even under high load conditions or low-temperature conditions when being applied to a non-aqueous electrolyte secondary power source due to the use of the support salt mixture of LiPF$_6$ and the lithium amide. Also, there can be provided a non-aqueous electrolyte secondary power source comprising the non-aqueous electrolyte and having high safety and excellent discharge characteristics.

In the non-aqueous electrolyte according to the invention, it is considered that a non-combustible gas component generated by the thermal decomposition of the cyclic phosphazene compound develops high flame retardance. Although the reason is not necessarily clear, it is also considered that a film formed on a surface of an electrode by a synergistic effect of the support salt mixture of LiPF$_6$ and the lithium amide and the cyclic phosphazene compound is thin and has a low resistivity and thereby can accomplish excellent discharge characteristics even under high load conditions or low-temperature conditions. Incidentally, the improvement in the discharge characteristics developed by the non-aqueous electrolyte according to the invention is not observed when the cyclic phosphazene compound is not used or a single support salt of LiPF$_6$ or the lithium amide is used. Further, it is considered that since the support salt mixture dissolved hardly deposits even under low-temperature conditions in the non-aqueous electrolyte according to the invention, stable low-temperature discharge characteristics can be developed even when a large amount of the cyclic phosphazene compound being low in the solubility of a support salt is used.

BEST MODE FOR CARRYING OUT THE INVENTION

<Non-aqueous electrolyte>

The non-aqueous electrolyte according to the invention will be described in detail below. The non-aqueous electrolyte according to the invention is characterized by comprising the cyclic phosphazene compound represented by the general formula (I) and the specified lithium compounds and is preferable to comprise an aprotic organic solvent as a non-aqueous solvent.

The cyclic phosphazene compound contained in the non-aqueous electrolyte according to the invention is represented by the general formula (I). In the formula (I), Rs are independently fluorine, an alkoxy group or an aryloxy group, and n is 3-4.

As the alkoxy group in R of the formula (I) are mentioned methoxy group, ethoxy group, propoxy group, butoxy group, an allyloxy group containing a double bond, an alkoxy-substituted alkoxy group such as methoxy ethoxy group, methoxy ethoxy ethoxy group or the like, and so on. Also, as the aryloxy group in R are mentioned phenoxy group, methylphenoxy group, xylenoxy group (i.e. xylyloxy group), methoxy phenoxy group and the like. A hydrogen element in the alkoxy group and the aryloxy group may be substituted with a halogen element and is preferable to be substituted with fluorine. Moreover, R in the formula (I) may be bonded with another R. In this case, two Rs are bonded with each other to form an alkylenedioxy group, an arylenedioxy group or an oxyalkylene-aryleneoxy group, and as such a bivalent group are mentioned ethylenedioxy group, propylenedioxy group, phenylenedioxy group and the like.

Rs in the general formula (I) may be same or different. Moreover, as to R in the formula (I), it is preferable that four or more of Rs are fluorine in view of simultaneously establishing the non-combustibility and the low viscosity.

Furthermore, n in the formula (I) is 3-4. The cyclic phosphazene compounds may be used alone or in a combination of two or more.

In the non-aqueous electrolyte according to the invention, the content of the cyclic phosphazene compound is preferably 5-60% by volume, more preferably 10-50% by volume based on the whole of the non-aqueous electrolyte from a viewpoint of balancing the safety and the power source characteristics. When the content of the cyclic phosphazene compound exceeds 60% by volume, the load characteristics of the power source is undesirably deteriorated even when the support salt mixture is used, while when it is less than 5% by volume, the electrolyte may not exhibit non-combustibility when an organic solvent having a low flash point is used in the electrolyte.

As the support salt of the non-aqueous electrolyte according to the invention is used the support salt mixture comprising (1) $LiPF_6$ and (2) at least one lithium amide selected from the group consisting of $Li(FSO_2)_2N$, $Li(CF_3SO_2)_2N$ and $Li(C_2F_5SO_2)_2N$. These lithium amides may be used alone or in a combination of two or more.

The molar ratio of the $LiPF_6$ to the lithium amide ($LiPF_6$/lithium amide) is preferably within a range of 1/9-9/1, more preferably within a range of 1/4-4/1. When the molar ratio is less than 1/9, it is observed that the discharge capacity is deteriorated in some electrode materials, while when it is more than 9/1, it is observed that the discharge performance at low temperature is deteriorated in some electrolyte compositions. Further, when the molar ratio is within a range of 1/4-4/1, the discharge capacity is large and the discharge performance at low temperature is excellent.

The total concentration of the support salts in the non-aqueous electrolyte is preferably 0.3-2.5 mol/L (M), more preferably 0.8-2.0 mol/L (M). When the total concentration of the support salts is less than 0.3 mol/L, the electric conductivity of the electrolyte cannot be sufficiently ensured and troubles may be caused in the discharge property and the charge property of the power source, while when it exceeds 2.5 mol/L, the viscosity of the electrolyte rises and the sufficient mobility of the lithium ion cannot be ensured, and hence the sufficient electric conductivity of the electrolyte cannot be ensured and troubles may be caused in the discharge property and the charge property of the power source likewise the above-mentioned case.

In the non-aqueous electrolyte according to the invention, as the non-aqueous solvent may be used various aprotic organic solvents commonly used in the non-aqueous electrolyte for the secondary power source within a scope of not damaging the object of the invention. The content of the non-aqueous solvent is preferably within a range of 40-95% by volume, more preferably within a range of 50-90% by volume based on the whole of the non-aqueous electrolyte from a viewpoint of balancing the safety and the power source characteristics. Further, when the aprotic organic solvent is used as the non-aqueous solvent, the amount of the aprotic organic solvent used is preferable to be not more than 80% by volume in the non-aqueous electrolyte in order to ensure the non-combustibility in the electrolyte.

As the aprotic organic solvent are concretely mentioned carbonates such as dimethyl carbonate (DMC), diethyl carbonate (DEC), diphenyl carbonate, ethyl methyl carbonate (EMC), ethylene carbonate (EC), propylene carbonate (PC), vinylene carbonate (VC) and the like; carboxylate esters such as methyl propionate (MP), methyl formate (MF) and the like; ethers such as 1,2-dimethoxy ethane (DME), tetrahydrofuran (THF), diethyl ether (DEE) and the like; lactones such as γ-butyrolactone (GBL), γ-valerolactone and the like; nitriles such as acetonitrile and the like; amides such as dimethylformamide and the like; sulfones such as dimethyl sulfoxide and the like; and sulfides such as ethylene sulfide and the like. Among them, the carbonates and the carboxylate esters are preferably used from a viewpoint of balancing the power source characteristics. These aprotic organic solvents may be used alone or in a combination of two or more.

In the formation of the non-aqueous electrolyte secondary power source, the non-aqueous electrolyte according to the invention can be used as it is, but may be used through a method of impregnating into, for example, a suitable polymer, a porous support or a gelatinous material for keeping.

<Non-aqueous electrolyte secondary power source>

Then, the non-aqueous electrolyte secondary power source according to the invention will be described in detail. The non-aqueous electrolyte secondary power source of the invention comprises the above-mentioned non-aqueous electrolyte, a positive electrode and a negative electrode, and may be provided with other members usually used in the technical field of the non-aqueous electrolyte secondary power source such as a separator and the like, if necessary. Moreover, the non-aqueous electrolyte secondary power source according to the invention encompasses a non-aqueous electrolyte secondary battery as well as an electric double layer capacitor (lithium ion capacitor or hybrid capacitor) using a polarizable carbon electrode as the positive electrode and a nonpolarizable carbon electrode capable of previously occluding lithium ions and further reversibly occluding and releasing the lithium ions as the negative electrode.

As an active material for the positive electrode of the non-aqueous electrolyte secondary power source according to the invention are preferably mentioned metal oxides such as $V_2O_5$, $V_6O_{13}$, $MnO_2$ $MnO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; electrically conductive polymers such as polyaniline and the like; and carbonaceous materials such as active carbon and the like. The lithium-containing composite oxide may be a composite oxide including two or three transition metals selected from the group consisting of Fe, Mn, Co, Al and Ni. In this case, the composite oxide is represented by $LiMn_xCo_yNi_{(1-x-y)}O_2$ [wherein $0 \le x \le 1$, $0 \le y \le 1$, $0 < x+y \le 1$], $LiMn_xNi_{(1-x)}O_2$ [wherein $0 \le x < 1$], $LiMn_xCo_{(1-x)}O_2$ [wherein $0 \le x < 1$], $LiCo_xNi_{(1-x)}O_2$ [wherein $0 \le x < 1$], $LiCo_xNi_yAl_{(1-x-y)}O_2$ [wherein $0 \le x < 1$, $0 \le y < 1$, $0 < x+y \le 1$], $LiFe_xCo_y$-$Ni_{(1-x-y)}O_2$ [wherein $0 \le x < 1$, $0 \le y < 1$, $0 < x+y \le 1$], $LiMn_xFe_yO_{2-x-y}$ or the like. These active materials for the positive electrode may be used alone or in a combination of two or more.

As an active material for the negative electrode of the non-aqueous electrolyte secondary power source according to the invention are preferably mentioned lithium metal itself, an alloy of lithium with Al, In, Sn, Si, Pb, Zn or the like, a metal oxide such as $TiO_2$ doped with lithium ion or the like, a metal oxide composite such as $TiO_2$-$P_2O_4$ or the like, and a carbonaceous material such as graphite or the like. These active materials for the negative electrode may be used alone or in a combination of two or more.

The positive electrode and the negative electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE), styrene-butadiene rubber (SBR), carboxymethyl cellulose (CMC) and the like. These additives may be compounded in the same compounding ratio as in the conventional case.

As the other member used in the non-aqueous electrolyte secondary power source of the invention is mentioned a separator interposed between the positive and negative electrodes in the non-aqueous electrolyte secondary power source so as to prevent short-circuiting of current due to the contact between the electrodes. As a material of the separator are preferably mentioned materials capable of surely preventing the contact between the electrodes and passing or impregnating the electrolyte such as non-woven fabrics, thin-layer films and the like made of a synthetic resin such as polytetrafluoroethylene, polypropylene, polyethylene, cellulose based resin, polybutylene terephthalate, polyethylene terephthalate or the like. They may be a single substance, a mixture or a copolymer. Among them, a microporous film having a thickness of about 20-50 $\mu$m and made of polypropylene or polyethylene, and a film made of cellulose based resin, polybutylene terephthalate, polyethylene terephthalate or the like are particularly preferable. In the invention, various well-known members usually used in the secondary power source can be preferably used in addition to the above separator.

The form of the above non-aqueous electrolyte secondary power source according to the invention is not particularly limited, but there are preferably mentioned various well-known forms such as coin type, button type, paper type, polygonal form, cylindrical type of spiral structure and so on. In case of the button type, the non-aqueous electrolyte secondary power source can be made by preparing sheet-shaped positive and negative electrodes and sandwiching the separator between the positive and negative electrodes. Also, in case of the spiral structure, the non-aqueous electrolyte secondary power source can be made by preparing a sheet-shaped positive electrode, sandwiching between collectors, piling a sheet-shaped negative electrode thereon and then winding them or the like.

«EXAMPLES»

The following examples are given in illustration of the invention and are not intended as limitations thereof.

(Example 1)

A non-aqueous electrolyte is prepared by dissolving 0.5 mol/L of $LiPF_6$ and 0.3 mol/L of LiTFSI [$Li(CF_3SO_2)_2N$] in a mixed solvent of 10% by volume of a cyclic phosphazene compound of the general formula (I) wherein n is 3, one of all Rs is phenoxy group and five thereof are fluorine, 30% by volume of ethylene carbonate and 60% by volume of dimethyl carbonate. Then, the flame retardance of the thus obtained non-aqueous electrolyte is evaluated by the following method to obtain a result shown in Table 1.

(1) Evaluation of flame retardance

A burning length and a burning time of a flame ignited under an atmospheric environment are measured and evaluated according to a method arranging UL94HB method of UL (Underwriting Laboratory) standard. Concretely, a test piece is prepared by impregnating a $SiO_2$ sheet of 127 mm x 12.7 mm with 1.0 mL of the electrolyte based on UL test standard and evaluated. Evaluation standards of non-combustibility, flame retardance, self-extinguishing property and combustion property are shown below.

<Evaluation of non-combustibility> In a case that a test flame does not ignite a test piece (combustion length: 0 mm), it is evaluated that there is non-combustibility.

<Evaluation of flame retardance> In a case that the ignited flame does not arrive at a line of 25 mm and the ignition is not observed in the falling object, it is evaluated that there is flame retardance.

<Evaluation of self-extinguishing property> In a case that the ignited flame extinguishes at a line of 25-100 mm and the ignition is not observed in a falling object, it is evaluated that there is self-extinguishing property.

<Evaluation of combustion property> In a case that the ignited flame exceeds a line of 100 mm, it is evaluated that there is combustion property.

Then, lithium-cobalt composite oxide [$LiCoO_2$] is used as an active material for a positive electrode, and this oxide, acetylene black as an electrically conducting agent and polyvinylidene fluoride as a binding agent are mixed at a mass ratio of 94:3:3 and dispersed into N-methylpyrrolidone to prepare a slurry, and the slurry is applied on an aluminum foil as a collector for a positive electrode, dried and then punched out in the form of a disk having a diameter of 12.5 mm to make a positive electrode. Also, a natural graphite is used as an active material for a negative electrode, and the natural graphite and polyvinylidene fluoride as a binding agent are mixed at a mass ratio of 90:10 and dispersed into an organic solvent (mixed solvent of 50/50% by mass of ethyl acetate and ethanol) to prepare a slurry, and the slurry is applied on a copper foil as a collector for a negative electrode, dried and then punched out in the form of a disk having a diameter of 12.5 mm to make a negative electrode. Then, the positive and negative electrodes are overlapped through a separator (micro-porous film: made of polypropylene) impregnated with the electrolyte, and accommodated in a stainless case serving as a positive terminal, and sealed with a stainless sealing plate serving as a negative terminal through a polypropylene gasket to prepare a coin-type battery (non-aqueous electrolyte secondary battery) having a diameter of 20 mm and a thickness of 1.6 mm. With respect to the resulting coin-type battery, load characteristics and low-temperature characteristics are evaluated according to the following methods.

(2) Evaluation of load characteristics for the coin-type battery

With respect to the thus obtained coin-type battery, discharge-recharge are repeated in an atmosphere of 20°C at a voltage range of 4.2-3.0 V and a current density of 0.6 mA/cm$^2$ two cycles, and the discharge capacity is measured at this time. Further, the battery is recharged under the same charging condition, then the discharge capacity is measured at a current density of 15.0 mA/cm$^2$, and the high-load discharge rate is calculated from the following equation:

$$\text{High-load discharge rate} = (\text{the discharge capacity at } 15.0 \text{ mA/cm}^2) \,/\, (\text{the discharge capacity at } 0.6 \text{ mA/cm}^2) \times 100 \ (\%)$$

and is used as an indication for the load characteristics. A result is shown in Table 1.

(3) Evaluation of low-temperature characteristics for the coin-type battery

With respect to the thus obtained coin-type battery, discharge-recharge are repeated in an atmosphere of 20°C at a voltage range of 4.2-3.0 V and a current density of 0.6 mA/cm$^2$ two cycles, and the discharge capacity is measured at this time. Further, the battery is recharged under the same charging condition, then the discharge capacity is measured in an atmosphere of 0°C at a current density of 9.0 mA/cm$^2$, and the low-temperature discharge rate at 0°C is calculated from the following equation:

$$\text{Low-temperature discharge rate at } 0°C = (\text{the discharge capacity at } 0°C \text{ and } 9.0 \text{ mA/cm}^2) \,/\, (\text{the discharge capacity at } 20°C \text{ and } 0.6 \text{ mA/cm}^2) \times 100 \ (\%)$$

Moreover, the discharge capacity is measured similarly in an atmosphere of -30°C at a current density of 1.5 mA/cm$^2$, and the low-temperature discharge rate at -30°C is calculated from the following equation:

$$\text{Low-temperature discharge rate at } -30°C = \text{(the discharge}$$
$$\text{capacity at } -30°C \text{ and } 1.5 \text{ mA/cm}^2\text{) / (the discharge capacity at } 20°C$$
$$\text{and } 0.6 \text{ mA/cm}^2\text{)} \times 100 \text{ (\%)}$$

Furthermore, they are used as an indication for the low-temperature characteristics. Results are shown in Table 1.

(Example 2)

A non-aqueous electrolyte is prepared by dissolving 0.8 mol/L of $LiPF_6$ and 0.2 mol/L of LiFSI [Li$(FSO_2)_2$N] in a mixed solvent of 30% by volume of a cyclic phosphazene compound of the general formula (I) wherein n is 3, two of all Rs are methoxy group and four thereof are fluorine, 7% by volume of ethylene carbonate and 63% by volume of diethyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 3)

A non-aqueous electrolyte is prepared by dissolving 1 mol/L of $LiPF_6$ and 1 mol/L of LiTFSI [Li$(CF_3SO_2)_2$N] in a mixed solvent of 40% by volume of a cyclic phosphazene compound of the general formula (I) wherein n is 3, one of all Rs is ethoxy group and five thereof are fluorine, 12% by volume of ethylene carbonate and 48% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 4)

A non-aqueous electrolyte is prepared by dissolving 0.5 mol/L of $LiPF_6$ and 1 mol/L of LiTFSI [Li$(CF_3SO_2)_2$N] in a mixed solvent of 50% by volume of a cyclic phosphazene compound of the general formula (I) wherein n is 3, one of all Rs is trifluoroethoxy group and five thereof are fluorine, 5% by volume of ethylene carbonate and 45% by volume of methyl propionate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 5)

A non-aqueous electrolyte is prepared by dissolving 0.6 mol/L of $LiPF_6$ and 0.6 mol/L of LiTFSI [Li$(CF_3SO_2)_2$N] in a mixed solvent of 60% by volume of a cyclic phosphazene compound of the general formula (I) wherein n is 3, one of all Rs is ethoxy group and five thereof are fluorine, 4% by volume of ethylene carbonate and 36% by volume of methyl propionate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 6)

A non-aqueous electrolyte is prepared by dissolving 0.3 mol/L of $LiPF_6$ and 1.2 mol/L of LiBETTI [Li$(C_2F_SSO_2)_2$N] in a mixed solvent of 5% by volume of a cyclic phosphazene compound of the general formula (I) wherein n is 3, two of all Rs are bonded with propylenedioxy group and four thereof are fluorine, 35% by volume of a cyclic phosphazene compound of the general formula (I) wherein n is 4, one of all Rs is propoxy group and seven thereof are fluorine, 12% by volume of ethylene carbonate and 48% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Comparative Example 1)

A non-aqueous electrolyte is prepared by dissolving 1 mol/L of LiPF$_6$ in a mixed solvent of 33% by volume of ethylene carbonate and 67% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Comparative Example 2)

A non-aqueous electrolyte is prepared by dissolving 1 mol/L of LiPF$_6$ and 1 mol/L of LiTFSI [Li(CF$_3$SO$_2$)$_2$N] in a mixed solvent of 33% by volume of ethylene carbonate and 67% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Comparative Example 3)

A non-aqueous electrolyte is prepared by dissolving 1 mol/L of LiPF$_6$ in a mixed solvent of 40% by volume of a cyclic phosphazene compound of the general formula (I) wherein n is 3, one of all Rs is ethoxy group and five thereof are fluorine, 12% by volume of ethylene carbonate and 48% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Comparative Example 4)

A non-aqueous electrolyte is prepared by dissolving 1 mol/L of LiTFSI [Li(CF$_3$SO$_2$)$_2$N] in a mixed solvent of 40% by volume of a cyclic phosphazene compound of the general formula (I) wherein n is 3, one of all Rs is ethoxy group and five thereof are fluorine, 12% by volume of ethylene carbonate and 48% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 7)

A non-aqueous electrolyte is prepared by dissolving 0.5 mol/L of LiPF$_6$ and 0.3 mol/L of LiTFSI [Li(CF$_3$SO$_2$)$_2$N] in a mixed solvent of 4% by volume of a cyclic phosphazene compound of the general formula (I) wherein n is 3, one of all Rs is phenoxy group and five thereof are fluorine, 32% by volume of ethylene carbonate and 64% by volume of dimethyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 8)

A non-aqueous electrolyte is prepared by dissolving 1.0 mol/L of LiPF$_6$ and 0.1 mol/L of LiFSI [Li(FSO$_2$)$_2$N] in a mixed solvent of 30% by volume of a cyclic phosphazene compound of the general formula (I) wherein n is 3, two of all Rs are methoxy group and four thereof are fluorine, 7% by volume of ethylene carbonate and 63% by volume of diethyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 9)

A non-aqueous electrolyte is prepared by dissolving 0.1 mol/L of LiPF$_6$ and 1.0 mol/L of LiBETTI [Li(C$_2$F$_s$SO$_2$)$_2$N] in a mixed solvent of 5% by volume of a cyclic phosphazene compound of the general formula (I) wherein n is 3, two of all Rs are bonded with propylenedioxy group and four thereof are fluorine, 35% by volume of a cyclic phosphazene compound of the general formula (I) wherein n is 4, one of all Rs is propoxy group and seven thereof are fluorine, 12% by volume of ethylene carbonate and 48% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

(Example 10)

A non-aqueous electrolyte is prepared by dissolving 0.5 mol/L of $LiPF_6$ and 0.3 mol/L of LiTFSI [$Li(CF_3SO_2)_2N$] in a mixed solvent of 65% by volume of a cyclic phosphazene compound of the general formula (I) wherein n is 3, one of all Rs is ethoxy group and five thereof are fluorine, 3% by volume of ethylene carbonate and 32% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the low-temperature characteristics are evaluated, respectively. Results are shown in Table 1.

Table 1

| | Evaluation of flame retardance | Evaluation of load characteristics High-load discharge rate | Evaluation of Low-temperature characteristics | |
| --- | --- | --- | --- | --- |
| | | | Low-temperature discharge rate at 0°C | Low-temperature discharge rate at -30°C |
| Example 1 | Non-combustibility | 58% | 75% | 65% |
| Example 2 | Non-combustibility | 85% | 83% | 71% |
| Example 3 | Non-combustibility | 85% | 80% | 70% |
| Example 4 | Non-combustibility | 87% | 82% | 75% |
| Example 5 | Non-combustibility | 68% | 70% | 58% |
| Example 6 | Non-combustibility | 78% | 73% | 66% |
| Comparative Example 1 | Combustion property | 49% | 67% | 53% |
| Comparative Example 2 | Combustion property | 45% | 64% | 14% |
| Comparative Example 3 | Non-combustibility | 35% | 30% | 49% |
| Comparative Example 4 | Non-combustibility | 25% | 1% | 0% |
| Example 7 | Flame retardance | 55% | 73% | 58% |
| Example 8 | Non-combustibility | 53% | 67% | 55% |
| Example 9 | Non-combustibility | 38% | 32% | 26% |
| Example 10 | Non-combustibility | 55% | 53% | 42% |

As seen from Examples 1-6 in Table 1, the non-aqueous electrolyte containing the phosphazene compound of the formula (I), $LiPF_6$ and the lithium amide has a non-combustibility, and the battery using the non-aqueous electrolyte has the excellent discharge characteristics even under the high-load condition and the low-temperature condition. Thus, it is confirmed that the non-aqueous electrolyte secondary power source exhibiting the non-combustibility and having excellent discharge performances can be obtained by the non-aqueous electrolyte according to the invention.

On the other hand, as shown in Comparative Example 2, when the support salt mixture of $LiPF_6$ and the lithium amide is used but the phosphazene compound of the formula (I) is not used, it is seen that the electrolyte exhibits the combustion property and the excellent improvements in the discharge performances as confirmed in Example 3 are not observed.

Also, as shown in Comparative Examples 3 and 4, when the support salt mixture of $LiPF_6$ and the lithium amide is not used, it is observed that adding a large amount of the phosphazene compound of the formula (I) tends to deteriorate the discharge characteristics.

Moreover, as shown in Example 7, when the content of the phosphazene compound of the formula (I) is less than 5% by volume, the non-combustibility is not exhibited. Also, as shown in Example 10, when the content of the phosphazene compound of the formula (I) exceeds 60% by volume, the notable improvements in the discharge characteristics are not observed even when the support salt mixture of $LiPF_6$ and the lithium amide is used. Thus, it is seen that the content of the phosphazene compound of the formula (I) is preferably within a range of 5-60% by volume, more preferably within a range of 10-50% by volume.

Further, as shown in Examples 8 and 9, when the molar ratio of the $LiPF_6$ to the lithium amide is less than 1/9 or more than 9/1, the notable improvements in the discharge characteristics are not observed. Thus, it is seen that the molar ratio of the $LiPF_6$ to the lithium amide is preferably within a range of 1/9-9/1, more preferably within a range of 1/4-4/1.

As seen from the above results, there can be provided the non-aqueous electrolyte secondary power source having the non-combustibility and the excellent discharge performances by using the non-aqueous electrolyte characterized by containing the cyclic phosphazene compound represented by the formula (I), $LiPF_6$ and the lithium amide. Further, this means that the non-aqueous electrolyte secondary power source having high output power and capable of exhibiting stable performances over a wide temperature range can be provided.

**Claims**

1. A non-aqueous electrolyte **characterized by** comprising:

   a cyclic phosphazene compound represented by the following general formula (I):

   $$(NPR_2)_n \qquad (I)$$

   wherein Rs are independently fluorine, an alkoxy group or an aryloxy group and n is 3-4;
   a non-aqueous solvent;
   $LiPF_6$; and
   at least one lithium amide selected from the group consisting of $Li(FSO_2)_2N$, $Li(CF_3SO_2)_2N$ and $Li(C_2F_5SO_2)_2N$.

2. A non-aqueous electrolyte according to claim 1, wherein at least four of the Rs in the general formula (I) are fluorine.

3. A non-aqueous electrolyte according to claim 1 or 2, wherein a content of the cyclic phosphazene compound represented by the general formula (I) is 10-50% by volume based on the whole of the non-aqueous electrolyte.

4. A non-aqueous electrolyte according to any one of claims 1-3, wherein a molar ratio of the $LiPF_6$ to the lithium amide is within a range of 1/4-4/1.

5. A non-aqueous electrolyte according to any one of claims 1-4, wherein the non-aqueous solvent is an aprotic organic solvent.

6. A non-aqueous electrolyte secondary power source comprising a non-aqueous electrolyte as claimed in any one of claims 1-5, a positive electrode and a negative electrode.

**Patentansprüche**

1. Nichtwässriger Elektrolyt, **dadurch gekennzeichnet, dass** er Folgendes umfasst: eine cyclische Phosphazenverbindung, die durch die folgende allgemeine Formel (I) dargestellt ist:

   $$(NPR_2)_n \qquad (I)$$

   wobei die R unabhängig Fluor, eine Alkoxygruppe oder eine Aryloxygruppe sind und n 3 - 4 beträgt;
   ein nichtwässriges Lösungsmittel;
   $LiPF_6$; und
   mindestes ein Lithiumamid ausgewählt aus der Gruppe bestehend aus $Li(FSO_2)_2N$, $Li(CF_3SO_2)_2N$ und $Li(C_2F_5SO_2)_2N$.

**2.** Nichtwässriger Elektrolyt nach Anspruch 1, wobei mindestens vier der R in der allgemeinen Formel (I) Fluor sind.

**3.** Nichtwässriger Elektrolyt nach Anspruch 1 oder 2, wobei ein Gehalt der cyclischen Phosphazenverbindung, die durch die allgemeine Formel (I) dargestellt ist, 10 - 50 Volumen-%, auf den gesamten nichtwässrigen Elektrolyt bezogen, beträgt.

**4.** Nichtwässriger Elektrolyt nach einem der Ansprüche 1 - 3, wobei ein Molverhältnis des $LiPF_6$ zum Lithiumamid innerhalb eines Bereichs von 1:4 - 4:1 liegt.

**5.** Nichtwässriger Elektrolyt nach einem der Ansprüche 1 - 4, wobei das nichtwässrige Lösungsmittel ein aprotisches organisches Lösungsmittel ist.

**6.** Nichtwässrige Elektrolyt-Sekundärenergiequelle umfassend einen nichtwässrigen Elektrolyt nach einem der Ansprüche 1 - 5, eine positive Elektrode und eine negative Elektrode.

**Revendications**

**1.** Électrolyte non aqueux **caractérisé par le fait qu'**il comprend:

un composé phosphazène cyclique représenté par la formule générale suivante (I):

$$(NPR_2)n \qquad (I)$$

dans laquelle les radicaux R sont indépendamment un groupe fluor, alcoxy ou un groupe aryloxy et n a la valeur de 3 à 4;
un solvant non aqueux;
$LiPF_6$; et
au moins un amide de lithium sélectionné parmi le groupe constitué de $Li(FSO_2)_2N$, $Li(CF_3SO_2)_2N$ et $Li(C_2F_5SO_2)_2N$.

**2.** Électrolyte non aqueux selon la revendication 1, dans lequel au moins quatre des radicaux R dans la formule générale (I) sont le fluor.

**3.** Électrolyte non aqueux selon la revendication 1 ou 2, dans lequel une teneur du composé phosphazène cyclique représenté par la formule générale (I) est de 10 à 50 % en volume basée sur la globalité de l'électrolyte non aqueux.

**4.** Électrolyte non aqueux selon l'une quelconque des revendications 1 à 3, dans lequel un rapport molaire de $LiPF_6$ à l'amide de lithium se situe dans une plage de 1/4 à 4/1.

**5.** Électrolyte non aqueux selon l'une quelconque des revendications 1 à 4, dans lequel le solvant non aqueux est un solvant organique aprotique.

**6.** Source d'alimentation secondaire d'électrolyte non aqueux comprenant un électrolyte non aqueux tel que revendiqué selon l'une quelconque des revendications 1 à 5, une électrode positive et une électrode négative.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04184870 A
- JP H0822839 A
- JP 2000182669 A
- JP H1167267 A
- JP H10189040 A
- JP 2003109659 A
- JP H0613108 A
- EP 1748511 A1
- JP 2006024380 A
- EP 1347530 A1
- EP 1329974 A1
- JP 2001052736 A
- JP 2006286751 A
- JP 2006059681 A
- JP 2002075444 A
- JP 2003077532 A
- JP 2005116306 A
- JP 2005116424 A
- WO 2005036690 A1